# EUROPÄISCHE PATENTSCHRIFT

(11) **EP 1 923 018 B1**
(45) Veröffentlichungstag und Bekanntmachung des Hinweises auf die Patenterteilung: **06.05.2009**
(21) Anmeldenummer: 06023782.3
(22) Anmeldetag: 16.11.2006
(51) Int. Cl.: A61C 5/06, A61C 9/00, A61C 19/00

(54) **Dentaler Handgriff**
Dental handgrip
Pièce à main dentaire

(43) Veröffentlichungstag der Anmeldung: 21.05.2008
(73) Patentinhaber: W & H Dentalwerk Bürmoos GmbH, 5111 Bürmoos (AT)
(72) Erfinder: Teufelberger, Gunter, 5111 Bürmoos (AT); Wagner, Hannes, 5023 Salzburg (AT)

(56) Entgegenhaltungen:
- DE-U1- 29 517 958
- FR-A- 2 190 176
- US-A- 4 673 353

## Beschreibung

Die vorliegende Erfindung betrifft einen dentalen Handgriff zur Abgabe von Füllmasse in eine Zahnkavität.

Ein derartiger Handgriff ist aus der Patentanmeldung WO 01/17454 A1 bekannt. Er dient zur Füllung von aushärtbaren Dentalmassen aus Kunststoffverbindungen oder Kunstharzen in zuvor präparierte Zahnkavitäten. Die Aushärtung der Kunststoffe oder Kunstharze erfolgt bevorzugt durch Bestrahlen mit Strahlung mit einer Wellenlängen im Bereich von etwa 320 nm - 400 nm oder mit blauem Licht mit einem Wellenlängenbereich von etwa 400 nm - 470 nm. Die Strahlungsleistung der Strahlung beträgt üblicherweise in etwa zumindest 400 mW/cm², bevorzugt mehr als 900 mW/cm².

Die Merkmale aus dem Oberbegriff des Anspruchs 1 sind aus DE 2951 7958 U bekannt.

Das Füllen der Zahnkavität und das Aushärten der Füllmassen führt der Zahnarzt in mehreren sich wiederholenden Schritten durch, wobei üblicherweise jeder Schritt das Einbringen einer Schicht Füllmasse, das Glattstreichen der Füllmasseschicht, gegebenenfalls das Entfernen überschüssiger Füllmasse und das Bestrahlen der Füllmasse beinhaltet. Die meisten Zahnfüllungen aus aushärtbarem Füllmaterial bestehen damit aus mehreren, nacheinander eingebrachten und ausgehärteten Schichten. Das Füllen einer Zahnkavität stellt somit für den Zahnarzt ein aufwendiges und zeitintensives Verfahren dar,

Der vorliegenden Erfindung liegt daher die Aufgabe zugrunde einen dentalen Handgriff zu schaffen, der das Füllen und Aushärten einer Zahnkavität für den Zahnarzt vereinfacht, weniger zeitaufwendig macht und der eine verbesserte Handhabung aufweist.

Diese Aufgabe wird gemäß der vorliegenden Erfindung durch einen dentalen Handgriff mit den Merkmalen des Anspruchs 1 gelöst. Besonders vorteilhafte Ausführungsformen sind in den Unteransprüchen angeführt.

Der erfindungsgemäße dentale Handgriff umfasst eine Lichtabgabevorrichtung über die Strahlung mit einer zum Aushärten von Füllmaterial geeigneten Wellenlänge und Strahlungsleistung bereitstellbar ist. Der Zahnarzt kann damit das Befüllen und Aushärten des Füllmaterials mit einem einzigen Gerät durchführen. Die Lichtabgabevorrichtung kann zumindest einen Lichtleiter, der Insbesondere als Glasstab, Glasfaser oder Glasfaserstab ausgebildet ist, und / oder zumindest eine Lichtquelle umfassen, die insbesondere als optisches Halbleiterelement ausgebildet ist. Die Energieversorgung der Lichtquelle kann über eine Batterie oder einen wiederaufladbaren Akkumulator erfolgen.

Bevorzugt ist der Handgriff mit einem Kupplungselement versehen, das zur Verbindung der Lichtabgabevorrichtung mit einer externen Licht- oder Energiequelle dient. Insbesondere ist das Kupplungselement derart ausgebildet, dass es an ein Gegenkupplungselement, das zum Anschluss an ein dentales Handinstrument mit einer anderen Funktion vorgesehen ist, kuppelbar ist. Ein derartiges Gegenkupplungselement kann zum Beispiel zum Anschluss einer Dentalturbine, eines dentalen Hand- oder Winkelstücks oder eines Zahnsteinentfernungsgeräts vorgesehen sein. Kupplungselement und Gegenkupplungselement weisen dabei jeweils zumindest einen Lichtleiter oder elektrische Kontakte auf, die einander in gekuppelten Zustand gegenüberstehen bzw. so angeordnet sind dass eine zuverlässige Licht- bzw. Energieübertragung gewährleistet ist.

Der dentale Handgriff weist zusätzlich einen Schwingungserreger auf, der direkt oder indirekt mit der Anschlussvorrichtung verbindbar oder verbunden ist, so dass die vom Schwingungserreger erzeugte Schwingung auf die Füllmasse übertragbar ist, so ist in einem besonders bevorzugten Ausführungsbeispiel das Kupplungselement des Handgriffs so gestaltet, dass es zusätzlich das Antriebsmedium für den Schwingungserreger, zum Beispiel Druckluft oder elektrischer Strom vom Gegenkupplungselement übernehmen kann. In vorteilhafter Weise benötigt der Handgriff bei diesen Ausführungsformen damit kein eigenes Versorgungsgerät sondern kann an bereits vorhandene Versorgungsgeräte, angeschlossen werden.

In einem weiteren bevorzugten Ausführungsbeispiel weist der Handgriff ein erstes Ende auf, an dem die Anschlussvorrichtung für das Füllmassebehältnis vorgesehen ist und an dem des Weiteren eine oder mehrere Lichtabgabeflächen der Lichtabgebevorrichtung angeordnet sind oder anordenbar sind. In vorteilhafter Weise wird damit die Anwendung des Handgriffs für den Zahnarzt zusätzlich erleichtert. Die Lichtabgabevorrichtung kann dabei entweder fix im Bereich des ersten Endes vorgesehen sein, sie kann jedoch auch beweglich, zum Beispiel verschiebbar am Handgriff angeordnet sein, so dass sie bei Bedarf In Richtung des ersten Endes oder bis zum ersten Ende oder darüber hinaus bewegt werden kann.

Um zu verhindern, dass der Anwender versehentlich gleichzeitig Füllmasse aus dem Füllmassebehältnis fördert und die Lichtabgabevorrichtung auf die Füllmasse richtet, so dass zum Beispiel eine unerwünschte, zumindest teilweise Aushärtung der Füllmasse erfolgt, bevor diese optimal in die Zahnkavität eingebracht ist, ist der Handgriff mit Sicherungsmitteln zur Verhinderung einer verfrühten oder versehentlichen Lichtabgabe auf die Füllmasse versehen. Diese Sicherungsmittel können unterschiedlichste Ausführungsformen umfassen, wobei ein dentaler Handgriff eine oder mehrere dieser Sicherungsmittel aufweisen kann. Ziel dieser Sicherungsmittel ist zu verhindern, dass Licht auf die Füllmasse auftrifft, bevor der Anwender beabsichtigt, das Füllmaterial auszuhärten, oder zumindest sicherzustellen, dass die auf die Füllmasse auftreffende Strahlungsleistung oder Intensität des Lichts so gering ist, dass keine vorzeitige, für den Patienten nachteilige Aushärtereaktion durch die Lichtabgabevorrichtung vor der eigentlichen, vom Zahnarzt bewusst gestarteten Aushärtung erfolgt.

Die Sicherungsmittel bestehen aus einer Schaltvorrichtung, die so ausgebildet ist, dass wahlweise die Fördervorrichtung zur Förderung der Füllmasse oder die Lichtabgabevorrichtung bzw. der Schwingungserreger oder die Lichtabgabevorrichtung betreibbar sind. Damit wird ein gleichzeitiges Betreiben oder Verwenden der Fördervorrichtung oder des Schwingungserregers und der Lichtabgabevorrichtung verhindert, wodurch eine vorzeitige, unerwünschte Aushärtereaktion verhindert wird. Die Schaltvorrichtung kann eine große Anzahl unterschiedlicher Ausführungen aufweisen, wobei sie grundsätzlich sowohl rein mechanisch, pneumatisch, hydraulisch, elektrisch oder elektronisch aufgebaut sein kann oder eine Mischform zweier oder mehrerer dieser Ausführungsformen beinhaltet.

Die Schaltvorrichtung kann zum Beispiel eine Sperrvorrichtung umfassen, um die Fördervorrichtung zu blockieren oder deren Betrieb zu unterbrechen, insbesondere ein zwischen einer Förder- und Stoppposition bewegbares mechanisches Sperrelement, insbesondere einen Stift. Das Sperrelement kann zum Beispiel in der Stoppposition einen händisch zu betätigenden Hebel der Fördervorrichtung sperren. Die Schaltvorrichtung kann des Weiteren Ventilelemente, zum Beispiel ein mechanisch oder elektrisch betätigbares Ventil, insbesondere ein Magnetventil umfassen, das eine Förderleitung der Füllmasse öffnet oder schließt, oder das eine Medienleitung zum Betrieb der Fördervorrichtung oder des Schwingungserregers öffnet oder schließt. Die Schaltvorrichtung kann elektrische Schalter aufweisen, die die Stromversorgung für die Lichtabgabevorrichtung unterbrechen oder herstellen. Die Schaltvorrichtung kann auch einen optischen Schalter, zum Beispiel eine optische Schließvorrichtung umfassen, der die Lichtleitung der Lichtabgabevorrichtung unterbrechen bzw. freigeben kann.

In einem ersten Ausführungsbeispiel bestehen die Sicherungsmittel zusätzlich aus der oder den Lichtabgabefläche(n) der Lichtabgabevorrichtung und aus der oder den Abgabeöffnung(en) des Füllmassebehälthisses, wobei die Lichtabgabefläche(n) und die Abgabeöffnung(en) so angeordnet sind, dass sie in unterschiedliche Richtungen weisen. Alternativ oder zusätzlich kann eine Vorrichtung, Insbesondere eine mechanische Vorrichtung, zum Beispiel eine dreh- oder schwenkbare Abdeckvorrichtungen vorgesehen sein, die so ausgebildet ist; dass entweder nur die Lichtabgabefläche(n) oder die Abgabeöffnung(en) frei ist/sind, so dass nur Licht oder Füllmaterial abgeben werden kann, wohingegen das andere der beiden Elemente (Lichtabgabefläche oder Abgabeöffnung) abgedeckt ist. Anstelle der Abdeckung der Lichtabgabefläche kann die Vorrichtung auch so ausgebildet sein, dass zumindest der Großteil des von der Lichtabgabevorrichtung abgegebenen Lichts abgelenkt, abgeschirmt oder absorbiert wird. Wesentlich ist, dass die Mittel so gestaltet sind, dass kein Licht auf das Füllmaterial gelangt, solange dies nicht vom Anwender gewünscht ist oder dass nur so wenig Licht auf das Füllmaterial auftrifft, dass es zu keiner vorzeitigen, unerwünschten Aushärtereaktion kommt.

Die Erfindung wird nachfolgend anhand bevorzugter Ausführungsbeispiele und Bezug nehmend auf die beigefügten Zeichnungen erläutert:
Figur 1 zeigt ein erstes Ausführungsbeispiel eines dentalen Handgriffs zur Abgabe von Füllmasse mit einem lösbar mit dem Handgriff verbindbaren Schwingungsüberträger zur Übertragung von Schwingungen auf das Füllmassebehältnls.
Figur 2 zeigt den dentalen Handgriff aus Figur 1 mit einer in Vibration versetzbaren Sonde, die anstelle des Schwingungsüberträgers mit dem Handgriff verbunden ist.
Figur 3 zeigt ein erstes Ausführungsbeispiel eines Ventils als Teil einer im Handgriff angeordneten Schaltvorrichtung, durch die wahlweise die Fördervorrichtung zur Förderung der Füllmasse bzw. der Schwingungserreger oder die Lichtabgebevorrichtung betreibbar ist.
Figur 4 zeigt ein zweites Ausführungsbeispiel eines Ventils als Teil einer im Handgriff angeordneten Schaltvorrichtung, durch die wahlweise die Fördervorrichtung zur Förderung der Füllmasse bzw. der Schwingungserreger oder die Lichtabgabevorrichtung betreibbar ist.
Figur 5 zeigt ein zweites Ausführungsbeispiel eines dentalen Handgriffs zur Abgabe von Füllmasse mit einer manuell verschlebbaren Fördervorrichtung zur Förderung der Füllmasse.
Figur 6 zeigt eine Schnittdarstellung des Handgriffs aus Figur 5 mit nach vorne verschobener Lichtabgabevorrichtung und mit nach vorne bewegter Fördervorrichtung.
Figur 7 zeigt eine Schnittdarstellung des Handgriffs aus Figur 5 mit nach hinten verschobener Lichtabgabevorrichtung und mit nach hinten bewegter Fördervorrichtung.
Figur 8 zeigt ein drittes Ausführungsbeispiel eines dentalen Handgriffs zur Abgabe von Füllmasse mit einer pneumatisch betriebenen Fördervorrichtung zur Förderung der Füllmasse und einem pneumatisch betriebenen Schwingungserreger.
Figur 9 zeigt eine Schnittdarstellung des Handgriffs aus Figur 8 mit nach vorne verschobener Lichtabgabevorrichtung und mit nach vorne bewegter Fördervorrichtung.
Figur 10 zeigt eine Schnittdarstellung des Handgriffs aus Figur 8 mit nach hinten verschobener Lichtabgabevorrichtung und mit nach hinten bewegter Fördervorrichtung.
Figur 11 zeigt eine vergrößerte Darstellung der Schaltvorrichtung des Handgriffs aus Figur 8, wobei die Schaltstellung zum Betrieb der Lichtabgabevorrichtung ausgewählt ist.
Figur 12 zeigt eine vergrößerte Darstellung der Schaltvorrichtung des Handgriffs aus Figur 8, wobei die Schaltstellung zum pneumatischen Betrieb der Fördervorrichtung und des Schwingungserregers ausgewählt ist.
Figur 13 zeigt das Vorderende eines dentalen Handgriffs zur Abgabe von Füllmasse mit einem ersten Ausführungsbeispiel einer Sonde zum Formen und Glätten der Füllmasse.
Figur 14 zeigt das Vorderende eines dentalen Handgriffs zur Abgabe von Füllmasse mit einem zweiten Ausführungsbeispiel einer Sonde zum Formen und Glätten der Füllmasse.
Figur 15 zeigt das Vorderende eines dentalen Handgriffs zur Abgabe von Füllmasse mit einem dritten Ausführungsbeispiel einer Sonde zum Formen und Glätten der Füllmasse.
Figur 16 zeigt ein erstes Ausführungsbeispiel eines Behältnisses für die Füllmasse mit einer biegsamen Kanüle.
Figur 17 zeigt ein zweites Ausführungsbeispiel eines Behältnisses für die Füllmasse mit einer kurzen Kanüle, die in etwa in einem rechten Winkel zum Behältniskörper angeordnet ist.
Figur 18 zeigt ein drittes Ausführungsbeispiel eines Behältnisses für die Füllmasse mit einer langen Kanüle mit einem verdickten Vorderende.
Figur 19 zeigt ein erstes Ausführungsbeispiel einer Anschlussvorrichtung für ein Füllmassebehältnis mit einem kurzen Spenderohr.
Figur 20 zeigt ein zweites Ausführungsbeispiel einer Anschlussvorrichtung für ein Füllmassebehältnis mit einem langen Spenderohr.
Figur 21 zeigt ein drittes Ausführungsbeispiel einer Anschlussvorrichtung für ein Füllmassebehältnis mit einem in etwa in einem rechten Winkel zum Trägertell angeordneten Spenderohr.

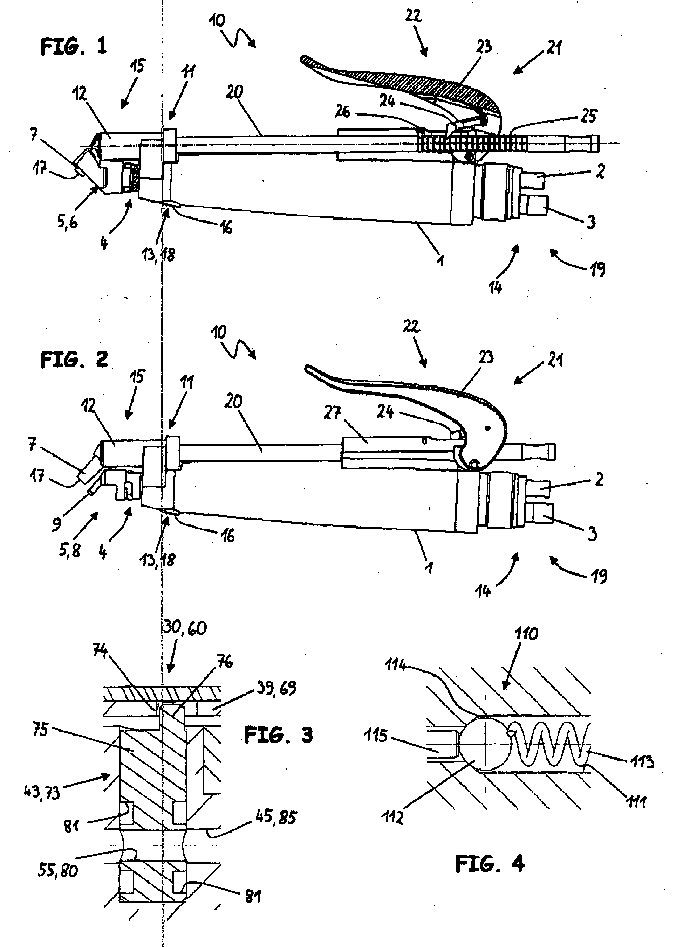

Der in den Figuren 1 und 2 dargestellte dentale Handgriff 10 zur Abgabe von Füllmasse in eine Zahnkavität besteht aus einem länglichen, im Wesentlichen zylindrischen Körper mit einer Außenhülse 1 mit einem ersten Ende 15 und einem zweiten Ende 19. Am zweiten Ende 19 ist ein Kupplungselement 14 vorgesehen, das bevorzugt so ausgebildet Ist, dass es an ein Gegenkupplungselement, das zum Anschluss an ein dentales Handinstrument mit einer anderen Funktion vorgesehen ist, kuppelbar ist. Bei diesem dentalen Handinstrument kann es sich insbesondere um ein mit Druckluft betriebenes Turbinenhandstück oder Zahnsteinentfemungshandstück handeln. Das Kupplungselement 14 umfasst zumindest einen ersten Anschluss 2 an eine Fluidquelle, bevorzugt eine Druckgasquelle, insbesondere an eine Druckluftquelle, wobei das Fluid über eine im Inneren des Handgriffs 10 angeordnete Leitung oder über Kanäle einem Schwingungserreger (nicht dargestellt) zugeführt werden kann. Über Anschluss 3 wird das Fluid nach Passieren des Schwingungserregers wieder aus dem Handgriff 10 abgeleitet. Als Fluid kann selbstverständlich auch eine Flüssigkeit, bevorzugt Wasser verwendet werden.

Das Fluid treibt den Schwingungserreger an, der direkt oder indirekt mit einer Anschlussvorrichtung 4 und einem darin aufgenommenem Werkzeug 5 verbunden ist, so dass das Werkzeug 5 in Schwingung versetzt werden kann, Der Schwingungserreger kann zum Beispiel ein Laufrad, eine in Rotation versetzbare Hülse, die eine Schwingachse umgibt, oder eine in einer Kammer aufgenommene, in Bewegung versetzbare Kugel oder Scheibe umfassen.

Die Anschlussvorrichtung 4 Ist als lösbare Anschlussvorrichtung, bevorzugt als Schnellkupplung, insbesondere als Bajonettkupplung ausgebildet, so dass an sie unterschiedliche Werkzeuge 5 anschließbar sind. In Figur 1 ist als Werkzeug 5 beispielhaft ein Schwingungsüberträger oder Sonotrode 6 abgebildet, dessen erstes Ende mit der Anschlussvorrichtung 4 lösbar verbindbar ist und dessen zweites Ende das Füllmassebehältnis 12 kontaktiert. Das zweite Ende der Sonotrode 6 kann unterschiedliche Formen aufweisen, zum Beispiel einen Rücksprung, eine Nut oder eine Bohrung. Wesentlich ist, dass eine kontaktierende Verbindung zwischen dem zweiten Ende des Schwingungsüberträgers 6 und zumindest einem Teil des Füllmassebehältnis 12, zum Beispiel dem Spenderohr 7 entsteht, so dass die Schwingung des Schwingungserregers auf das Behältnis 12 und die darin befindliche Füllmasse übertragen wird, wodurch die Füllmasse aufgrund der durch die Schwingung hervorgerufenen Viskositätsänderung einfacher in die Zahnkavität einbringbar ist.

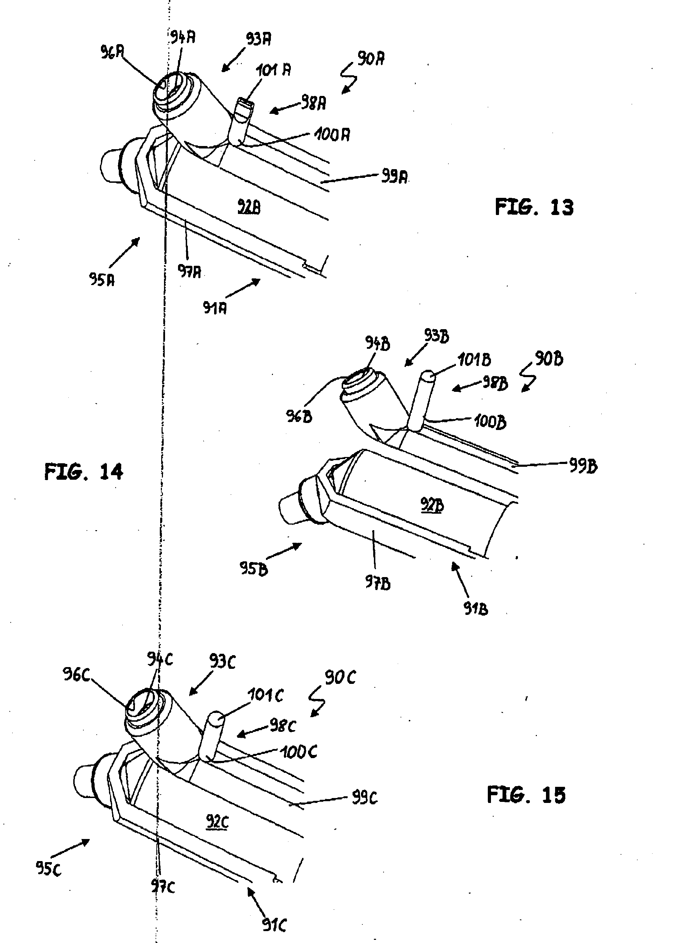

In Figur 2 ist das in die Anschlussvorrichtung 4 eingesetzte Werkzeug 5 als Sonde 8 ausgebildet, die der Zahnarzt zum Glätten, Stopfen, Formen oder Verdichten der in die Zahnkavität eingebrachten Füllmasse einsetzt. Die Sonde 8 weist wiederum ein erstes, mit der Anschlussvörrichtung 4 lösbar verbindbares Ende und ein zweites Ende oder Arbeitsende 9 auf. Das Arbeitsende 9, das zum Glätten, Stopfen, Formen oder Verdichten verwendet wird, kann dabei unterschiedliche Formen aufweisen, mit zum Beispiel runden, kugeligen, ovalen, abgestuften, keilförmigen oder sich verjüngenden Bereichen oder so gestaltet sein, wie es beispielhaft in den Figuren 13-15 dargestellt ist. Durch die Verbindung mit dem Schwingungserreger ist die Sonde 8 in Schwingung versetzbar, so dass eine deutlich bessere Arbeitswirkung erzielt wird als bei der Verwendung einer herkömmlichen, mit der Hand geführten Sonde.

Der Vorteil der Anschlussvorrichtung 4 besteht in der erweiterten Anwendbarkeit des Handgriffs 10 zum Füllen der Kavität mit Füllmasse und anschließender optimierter Nachbehandlung der Füllmasse mit der in Schwingung versetzbaren Sonde 8. Zur Durchführung der beiden Aufgaben ist es nur notwendig, die beiden Werkzeuge 6, 8 auszutauschen.

Der Handgriff 10 umfasst des Weiteren eine Lichtabgabevorrichtung 13 mit einer Lichtabgabefläche 16. die im Bereich des ersten Endes 15 des Handgriffs 10 durch eine Öffnung in der Außenhülse 1 austritt. Die Lichtabgabefläche 16 wird durch das Ende eines Lichtleiters 18, zum Beispiel eines Glasstabs oder Glasfaserstabs gebildet. Die Lichtabgabevorrichtung 13 umfasst des Weiteren eine im Handgriff 10 angeordnete Lichtquelle, die Strahlung mit einer Wellenlänge und Strahlungsleistung zum Aushärten von Füllmaterial emittiert, zum Beispiel ein optisches Halbleiterelement, und eine Energiequelle, zum Beispiel eine oder mehrere Batterien, Akkumulatoren oder einen Generator zur Versorgung der Lichtquelle. Damit ist ein Handgriff geschaffen, zu dessen Betrieb es ausreicht, diesen mit einer Fluidquelle zu verbinden und der unabhängig von anderen Medienquellen, insbesondere einer Energiequelle ist. Selbstverständlich ist es jedoch auch möglich Kupplungselement 14 mit elektrischen Kontakten zu versehen, so dass die Energieversorgung der Lichtquelle über eine externe Energiequelle erfolgt oder Kupplungselement 14 mit einem Lichtleiter auszustatten, so das der Handgriff mit Strahlung einer externen Strahlungsquelle versorgt wird. Anstelle des Lichtleiters kann die Lichtquelle auch in der Nähe der Öffnung der Außenhülse 1 vorgesehen sein, so dass die Lichtabgabefläche 16 als Teil der Lichtquelle ausgeführt ist.

Handgriff 10 kann zur Durchführung von drei Funktionen verwendet werden, nämlich zum Einfüllen von Füllmasse in eine Kavität, zur Nachbehandlung der Füllmasse mit der in Schwingung versetzbaren Sonde 8 und zum Aushärten der Füllmasse.

Handgriff 10 ist mit einer Fördervorrichtung 21 versehen, die vom Anwender manuell bedienbar ist. Fördervorrichtung 21 umfasst eine Schubstange 20, die über einen Vortriebsmechanismus 22 in Richtung des ersten Endes 15 des Handgriffs 10 bewegbar ist. Der Vortriebsmechanismus 22 besteht aus einem schwenkbaren Hebel 23, einem durch eine Feder vorgespannten Eingriffselement 24, das mit dem Hebel 23 drehbar verbunden ist, zum Beispiel einer Klinke mit einem keilförmigen Vorderende, und aus einem mit. Zähnen versehenen Abschnitt 25 der Schubstange 20, In welchen das Eingriffselement 24 eingreift.

Die Vorwärtsbewegung der Schubstange 20 in Richtung des ersten Endes 15 erfolgt durch eine Hin- und Herbewegung des Hebels 23, wobei durch das Schwenken des Hebels 23 in Richtung des ersten Endes 15 und der damit verursachten Bewegung des Eingriffselements 24 die Schubstange 20 ebenfalls in Richtung des ersten Endes 15 bewegt wird. Durch Schwenken des Hebels 23 in Richtung des zweiten Endes 19 wird das Eingriffselement 24 ebenfalls in diese Richtung verschoben, wodurch es in einen anderen, näher zum Ende 19 gelegenen Zahn des Abschnitts 25 eingreift. Eine Feder 26, die die Schubstange 20 in ihrem Abschnitt 25 umgibt, verhindert ein ungewolltes Zurückrutschen der Schubstange 20 während des Schwenkens des Hebels 23 in Richtung des zweiten Endes 19. Die Rückwärtsbewegung der Schubstange 20 In Richtung des zweiten Endes 19 erfolgt durch Anziehen an der Schubstange 20, wobei diese bevorzugt an jenem Ende, das in Richtung des zweiten Endes 19 des Handgriffs 10 weist, ein Griffelement, zum Beispiel in Form eines Griffmusters oder eines Rücksprungs aufweist.

Selbstverständlich kann der Vortriebsmechanismus 22 auch anders ausgeführt sein, zum Beispiel mit einem drehbaren Knopf oder einem verschiebbaren Schieber anstelle des Hebels 23 oder eines oder mehrere Zahnräder anstelle des klinkenförmigen Eingriffelements 24. Teile der Fördervorrichtung 21, insbesondere der gezahnte Abschnitt 25 können durch ein Gehäuse 27 abgedeckt sein.

Am ersten Ende 15 des Handgriffs 10 ist eine Anschlussvorrichtung 11 für ein Füllmassebehältnis 12 vorgesehen. Die Anschlussvorrlchtung 11 kann unterschiedlich ausgeführt sein, zum Beispiel als Steckverbindung, Klemmverbindung oder als Schnellverbindung, insbesondere als Bajonettverbindung. Das Füllmassebehältnis 12 weist einen Innenraum auf, in dem die Füllmasse aufgenommen ist, eine Abgabeöffnung 17, durch die die Füllmasse austreten kann, und eine bewegbare, verschiebbare Rückwand. Wird die Fördervorrichtung 21 betrieben, so wandert Schubstange 20 in Richtung der Anschlussvorrichtung 11, bis sie die Rückwand des Füllmassebehältnisses 12 erreicht. Durch das weitere Vorwärtstreiben der Schubstange 20 wird die Rückwand ebenfalls in Richtung der Abgabeöffnung 17 verschoben, wodurch die Füllmasse aus dem Behältnis 12 gedrückt wird.

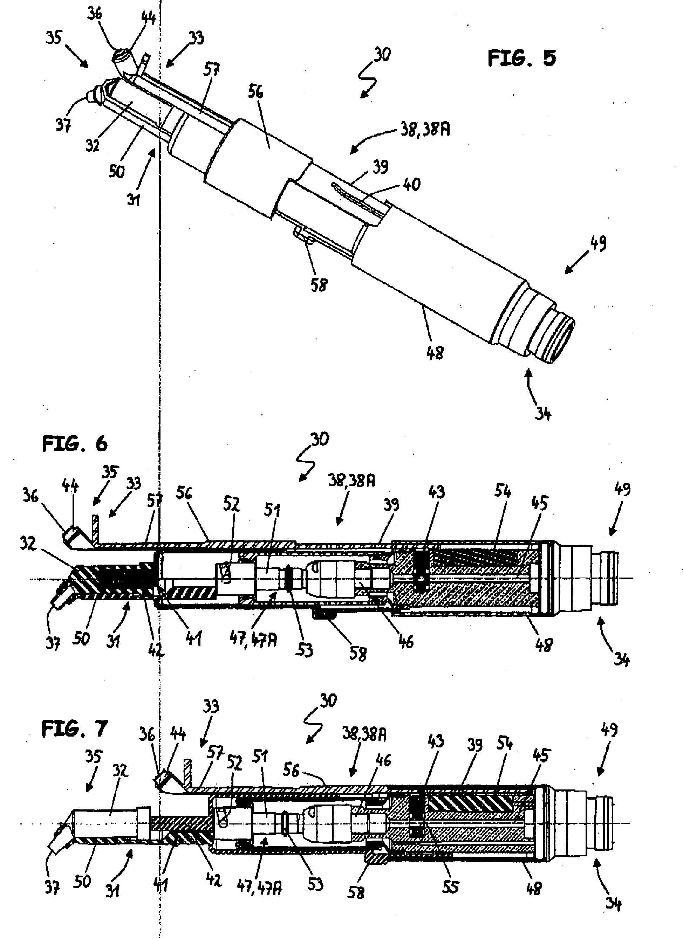

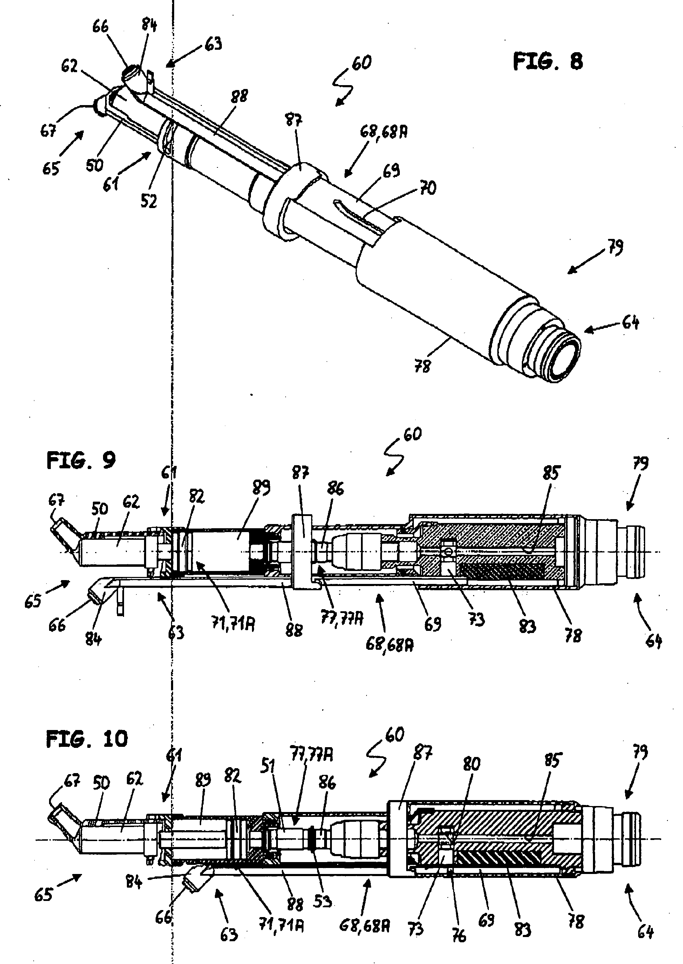

In den Figuren 5 - 7 ist ein zweites Ausführungsbeispiel eines dentalen Handgriffs 30 zur Abgabe von Füllmasse in eine Zahnkavität und in den Figuren 8 - 10 ist ein drittes Ausführungsbeispiel eines derartigen dentalen Handgriffs 60 dargestellt. Gleiche Bauteile werden im Folgenden für beide Handgriffe 30, 60 gemeinsam beschrieben.

Die Handgriffe 30, 60 bestehen aus einem länglichen, im Wesentlichen zylindrischen Körper mit einen Außenhülse 48, 78 und haben ein erstes Ende 35, 65 und ein zweites Ende 49, 79. Am zweiten Ende 49, 79 ist ein Kupplungselement 34, 64 vorgesehen, das bevorzugt so ausgebildet ist, dass es an ein Gegenkupplungselement, das zum Anschluss an ein dentales Handinstrument mit einer anderen Funktion vorgesehen ist, kuppelbar ist. Bei diesem dentalen Handinstrument kann es sich Insbesondere um ein mit Druckluft betriebenes Turbinenhandstück oder Zahnsteinentfemungshandstück oder um ein elektrisch betriebenes Hand oder Winkelstück oder um einen dentalen Kleinmotor, insbesondere einen Elektromotor handeln.

Kupplungselement 34, 64 weist zumindest einen Anschluss an eine Fluidquelle auf, von dem eine Fluidleitung 45, 85 in den Handgriff 30, 60 führt. Kupplungselement 34, 64 weist des Weiteren zumindest zwei elektrische Kontakte auf, von denen elektrische Leitungen zu zumindest einem Verbraucher im Handgriff 30, 60 führen. Kupplungselement 34, 64 kann verschieden ausgeführt sein, zum Beispiel als Steckkupplung, Bajonettkupplung oder als Schraubkupplung, bevorzugt ist sie jedoch als drehbare Steckkupplung ausgebildet.

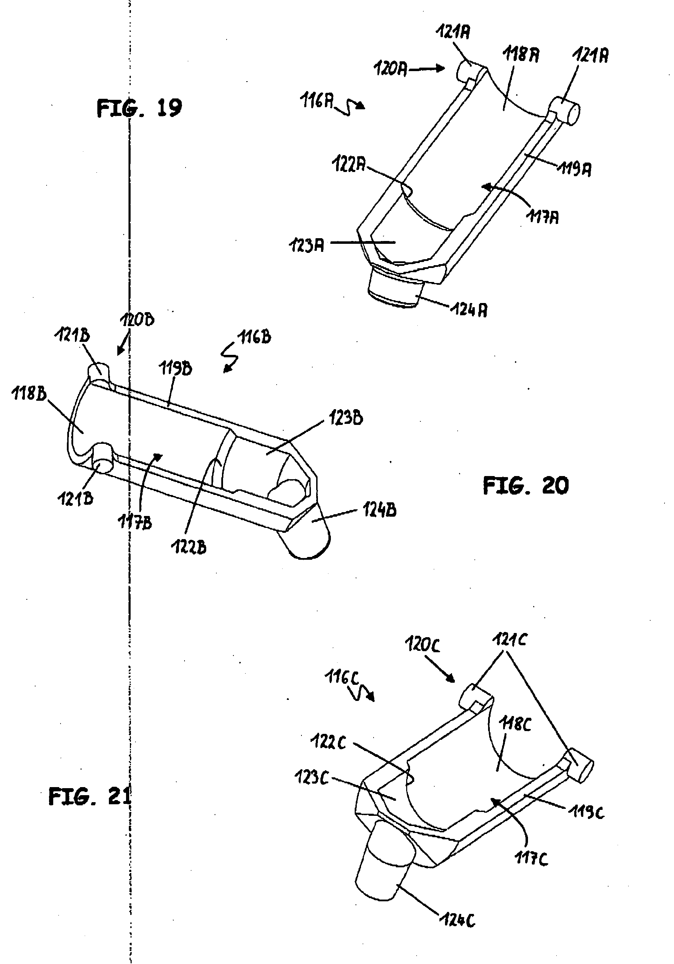

Am ersten Ende 35, 65 des Handgriffs 30, 60 Ist eine Anschlussvorrichtung 31, 61 für ein Füllmassebehältnis 32, 62 vorgesehen. Die Anschlussvorrichtung 31, 61 kann unterschiedlich ausgeführt sein, zum Beispiel als Steckverbindung. Klemmverbindung oder als Schnellverbindung, insbesondere als Bajonettverbindung 52. Bevorzugt umfasst die Anschlussvorrichtung 31, 61 eine Sonotrode 50, die besonders bevorzugt als Aufnahme, Insbesondere als längliche, mit einer Basis und einem darum verlaufenden Rand versehene Aufnahme ausgeführt ist, in welche das Füllmassebehältnis 32, 62 einsetzbar, einsteckbar oder in sonstiger Weise befestigbar ist. Die Sonotrode 50 kann zum Beispiel so wie in den Figuren 19-21 dargestellt ausgebildet sein.

Anschlussvorrichtung 31, 61 und insbesondere Sonotrode 50 sind mit einem im Inneren des Handgriffs 30, 60 angeordneten Schwingungserreger 47, 77 verbunden. Schwingungserreger 47, 77 kann als elektrischer Schwingungserreger, zum Beispiel als Piezoelement oder als magnetostriktives Element, oder bevorzugt als fluid-betriebener Schwingungserreger 47A, 77A ausgebildet sein. Der fluid-betriebene Schwingungserreger 47A, 77A kann zum Beispiel ein Laufrad oder eine in einer Kammer aufgenommene, in Bewegung versetzbare Kugel oder Scheibe umfassen und mit einem Druckgas oder mit einer Flüssigkeit betrieben Werden. In dem in den Figuren 5-10 dargestellten Ausführungsbeispielen wird der Schwingungserreger 47A, 77A mit Druckluft betrieben und umfasst eine hohle Schwingachse 46, 86, die mit der Fluidleitung 45, 85 verbunden ist. Druckluft fließt in die Schwingachse 46, 86 und tritt durch Bohrungen in der Schwingachse 46, 86 aus. Eine Drehhülse 51 ist über den Bohrungen angeordnet und wird durch die austretende Druckluft derart in Rotation versetzt, dass die Schwingachse 46, 86 in Vibration versetzt wird. O-Ringe 53 begrenzen die axiale Bewegung der Drehhülse 51. Die durch die Bohrungen ausgetretene Luft fließt durch Zwischenräume oder Leitungen im Inneren des Handgriffs 30,60 zurück in Richtung des Kupplungselements 34, 64,

Handgriff 30, 60 ist mit einer Lichtabgabevorrlchtung 33, 63 versehen, die eine Lichtquelle 44, 84, zum Beispiel zumindest ein optisches Halbleiterelement, insbesondere zumindest eine LED umfasst. Die Lichtquelle 44, 84 ist über elektrische Leitungen im Inneren des Handgriffs 30, 60 mit den elektrischen Kontakten des Kupplungselements 34, 64 verbunden. Die Lichtquelle 44, 84 emittiert Strahlung mit einer Wellenlänge und Strahlungsleistung, die zum Aushärten von Füllmaterial geeignet ist.

Lichtabgabevorrichtung 33, 63 insbesondere Lichtabgebefläche 36, 66 von Lichtabgabevorrichtung 33, 63 ist bevorzugt am ersten Ende 35, 65 des Handgriffs 30, 60 angeordnet bzw. anordenbar, wo sich auch Füllmassebehältnis 32, 62 befindet, Diese Anordnung bringt für den Anwender den Vorteil einer einfachen Handhabung des Handgriffs 30, 60, birgt jedoch auch die Gefahr, dass versehentlich Füllmasse aus dem Füllmassebehältnis 32, 62 abgegeben wird und gleichzeitig die Lichtabgabevorrichtung 33, 63 Licht auf die Füllmasse abstrahlt, so dass Füllmasse ausgehärtet wird, obwohl sich diese zum Beispiel noch nicht an ihrem gewünschten Platz befindet oder noch nicht optimal in der Zahnkavität verteilt ist. Um diese Gefahr zu minimieren, weist der dentale Handgriff 30, 60 mehrere Sicherungsmittel zur Verhinderung einer verfrühten oder versehentlichen Lichtabgabe auf die Füllmasse auf.

Diese Sicherungsmittel können eine Vielzahl unterschiedlicher Maßnahmen und Vorrichtungen umfassen. So sind die Lichtabgabefläche(n) 36, 66 der Lichtabgabevorrichtung 33, 63 und die Abgabeöffnung(en) 37, 67 des Füllmassebehältnisses 32, 62 so angeordnet, dass sie in unterschiedliche Richtungen weisen. Wesentlich ist dabei, dass die auf die Füllmasse auftreffende Leistung der Strahlung zumindest so gering ist, dass keine vorzeitige, für den Patienten nachteilige Aushärtereaktion durch die Lichtabgabevorrichtung vor der eigentlichen, vom Zahnarzt bewusst gestarteten Aushärtung erfolgt.

Als Sicherungsmittel des Handgriffs 30, 60 ist auch vorgesehen, die Lichtabgabevorrichtung 33, 63 beweglich, zum Beispiel drehbar, klappbar oder verschlebbar am Handgriff 30, 60 anzubringen. Die Lichtabgabevorrichtung 33, 63 kann somit zwischen einer ersten Position, in der die Lichtabgabe auf die Füllmasse für den Anwender zumindest erschwert oder unmöglich gemacht ist bzw. die auf die Füllmasse auftreffende Strahlungsleistung wie oben beschrieben verringert ist, und einer zweiten Position, in der das Anvisieren und Zielen mit der Lichtabgabevorrichtung 33, 63 und die Abgabe der Strahlung auf die Füllmasse begünstigt und vereinfacht ist, so dass eine zum Aushärten ausreichende Strahlungsleistung auf die Füllmasse auftrifft, bewegt werden. In den Ausführungsformen der Figuren 5 - 10 ist die als LED 44, 84 ausgeführte Lichtabgabevorrichtung 33, 63 auf einer Trägervorrichtung, zum Beispiel einem stabförmigen Träger 57, 88 befestigt, der verschlebbar am Handgriff 30, 60 angeordnet ist. Im Bereich des zweiten Endes 49, 79 ist ein Zwischenraum zwischen der Außenhülse 48, 78 und den im Inneren des Handgriffs 30, 60 aufgenommenen Bauteilen vorgesehen, so dass der stabförmige Träger 57, 88 in diesen Zwischenraum einführbar ist. LED 44, 84 ist somit in einer ersten, in den Figuren 6 und 9 dargestellten Position anordenbar, in der sie sich im Wesentlichen am ersten Ende 35, 65 des Handgriffs 30, 60 befindet und in der der Anwender die in einer Zahnkavität eingebrachte Füllmasse einfach und mit einer ausreichenden Strahlungsleistung aushärten kann, bzw. in einer zweiten, in den Figuren 7 und 10 dargestellten Position anordenbar, in der sie vom ersten Ende 35, 65 des Handgriffs 30, 60 entfernt ist, so dass die Aushärtung der Füllmasse für den Anwender erschwert ist.

Ein weiteres Sicherungsmittel des Handgriffs 30, 60 umfasst eine Vorrichtung 38, 68, insbesondere eine Schaltvorrichtung 38A, 68A, die so ausgebildet ist, dass wahlweise nur der Schwingungserreger 47, 47A, 77, 77A oder die Lichtabgabevorrichtung 33, 63 betreibbar sind. Bevorzugt weist die Schaltvorrichtung 38A, 68A zumindest ein gemeinsames Schaltglied 39, 69 für den Schwingungserreger 47, 77 und die Lichtabgabevorrichtung 33, 63 auf, wobei das Schaltglied 39, 69 insbesondere als Kullssenelement 40, 70 mit einem Führungsschlitz 74 ausgebildet ist.

Das Schaltglied 39, 69 umfasst elektrische Kontakte, die mit der Lichtabgabevorrichtung 33, 63 In Form einer Lichtquelle 44, 84, insbesondere zumindest einer LED über elektrische Leitungen verbunden oder verbindbar sind und diese mit Strom versorgen. Das Schaltglied 39, 69 ist zwischen zumindest zwei Positionen beweglich, zum Beispiel verschiebbar, verdrehbar oder verschwenkbar am Handgriff 30, 60 befestigt, wobei das Schaltglied 39, 69 und die elektrischen Kontakte so ausgebildet und / oder angeordnet sind, dass sie mit den zumindest zwei elektrischen Kontakten des Kupplungselements 34, 64 in einer der beiden Positionen verbunden sind und In der anderen der beiden Positionen von diesen Kontakten getrennt sind, so dass durch Betätigung des Schaltglieds 39, 69 die Lichtabgabevorrichtung 33, 63 ein- bzw. ausschaltbar ist.

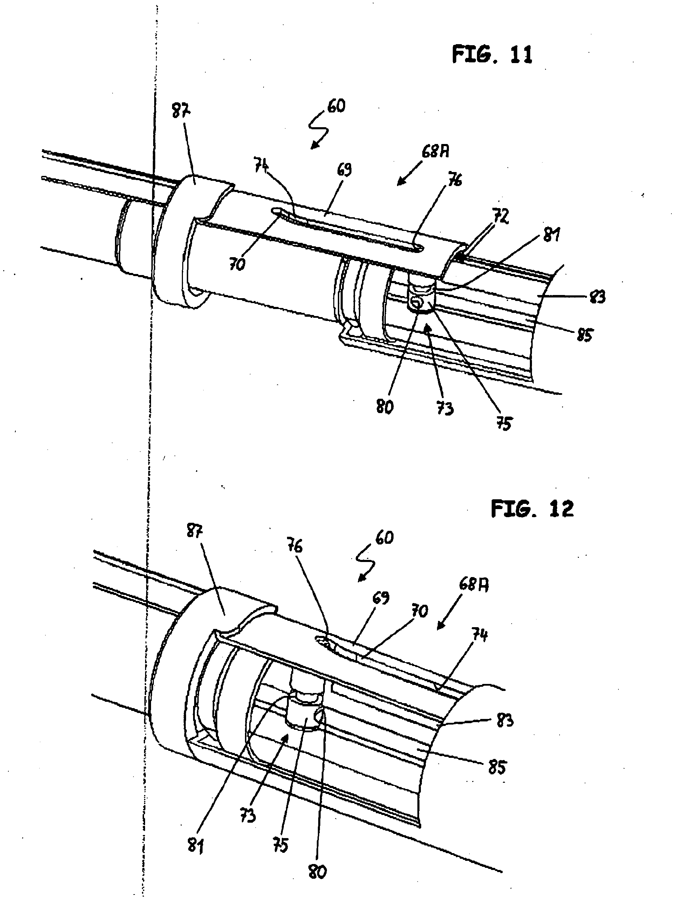

Um der Lichtabgabevorrichtung 33, 63 den benötigten Betriebsstrom zur Verfügung zu stellen, ist im Handgriff 30, 60 eine elektrische Versorgungseinheit 54, 83 vorgesehen. Diese enthält bekannte elektrische oder elektronische Bauteile wie Transformatoren, Dioden etc., um den von der Energiequelle erhaltenen Strom, insbesondere die Stromstärke, Spannungsart oder -höhe etc. für die Lichtabgabevorrichtung 33, 63 aufzubereiten. Wie insbesondere aus den Figuren 11 und 12 erkennbar ist, kann die Versorgungseinheit 54, 83 auch elektrische Schaltkontakte 72 enthalten, über die mit den elektrischen Schaltkontakten des Schaltglieds 39, 69 die Stromversorgung der Lichtabgabevorrichtung 33, 63 ein- bzw. ausschaltbar ist. Gemäß den Ausführungsformen der Figuren 6, 7 und 9, 10 sind die elektrischen Schaltkontakte 72 dabei an dem dem ersten Ende 35, 65 des Handgriffs 30, 60 zugewandten Ende der Versorgungseinheit 54, 83 angeordnet und die Schaltkontakte des Schaltglieds 39, 69 an dem dem zweiten Ende 49, 79 des Handgriffs 30, 60 zugewandten Ende des Schaltglieds 39, 69. In den Figuren 6, 9 und 11 nimmt das Schaltglied 39, 69 eine in Richtung des ersten Endes 35, 65 verschobene Position ein, so dass die Schaltkontakte des Schaltglieds 39, 69 über den Kontakten 72 angeordnet sind, mit diesen in Kontakt stehen und der Stromkreis zur Lichtabgabevorrichtung 33, 63 geschlossen ist. In dieser Position ist auch die Lichtabgabevorrichtung 33, 63, die vorteilhafter Weise mit dem Schaltglied 39, 69 verbunden Ist, nach vorne, an das erste Ende 35, 65 des Handgriffs 30, 60 verschoben, so dass eine für den Anwender optimale Handhabung des Handgriffs 30, 60 während des Aushärtens gewährleistet ist.

In den Figuren 7, 10 und 12 nimmt das Schaltglied 39, 69 eine in Richtung des zweiten Endes 49, 79 verschobene Position ein, so dass die Schaltkontakte des Schaltglieds 39, 69 von den Kontakten 72 entfernt sind und der Stromkreis zur Lichtabgabevorrichtung 33, 63 unterbrochen ist. Gleichzeitig ist auch die Lichtabgabevorrichtung 33, 63 in Richtung des zweiten Endes 49, 79 verschoben.

Schaltvorrichtung 38A, 68A mit Schaltglied 39, 69 ist des Weiteren so ausgebildet, dass über das Schaltglied 39, 69 ein Sperrelement, bevorzugt ein Ventil 43, 73 bedienbar ist, das die Versorgung von Schwingungserreger 47, 77 mit einem Antriebsmedium unterbricht. In den in den Figuren 6, 7, 9, 10 und 11, 12 dargestellten Ausführungsbeispielen wird der Schwingungserreger 47A, 77A über eine Fluidleitung 45, 85 mit Druckluft versorgt. Wie Insbesondere aus Figur 3 zu erkennen ist umfasst das Ventil 43, 73 einen zylindrischen, drehbar im Handgriff 30, 60 angeordneten Ventilkörper 75 mit einer Durchgangsbohrung 55, 80 und einem exzentrisch am Ventilkörper 75 befestigten Stift 76, der in Schlitz 74 des Schaltglieds 39, 69 aufgenommen ist. Führungsschlitz 74 ist gewinkelt oder gebogen ausgeführt, so dass durch das Verschieben des Schaltglieds 39, 69 der Ventilkörper 75 über den Exzenterstift 76 verdreht wird, um eine erste Position einzunehmen, in der Bohrung 55, 80 mit Fluidleitung 45, 85 fluchtet, so dass die Druckluft das Ventil 43, 73 In Richtung Schwingungserreger 47A, 77A passieren kann (siehe Figur 12), oder um eine zweite Position einzunehmen, in der Bohrung 55, 80 von Fluidleitung 45, 85 abgewandt ist, so dass die Verbindung zwischen der Druckluftquelle und dem Schwingungserreger 47A, 77A unterbrochen ist (siehe Figur 11). Zur Aufnahme von Dichtelementen, insbesondere O-Ringen sind am Ventilkörper 75 eine oder mehrere Nuten 81 vorgesehen.

Führungsschlitz 74 ist so ausgebildet und / oder am Schaltglied 39, 69 angeordnet, dass in jener Position, In der das Schaltglied 39, 69 so verschoben ist, dass der Stromkreis zur Lichtabgabevorrichtung 33, 63 geschlossen ist, die Bohrung 55, 80 von Fluidleitung 45, 85 abgewandt ist, so dass die Verbindung zwischen der Druckluftquelle und dem Schwingungserreger 47A, 77A unterbrochen Ist bzw. dass in jener Position, in der das Schaltglied 39, 69 so verschoben ist, dass der Stromkreis zur Lichtabgabevorrichtung 33, 63 geöffnet ist, die Bohrung 55, 80 der Fluidleitung 45, 85 zugewandt ist, so dass die Verbindung zwischen der Druckluftquelle und dem Schwingungserreger 47A, 77A durchgängig ist. Schaltvorrichtung 38, 38A, 68, 68A ist somit so ausgebildet, dass wahlweise entweder der Schwingungserreger 47A, 77A oder die Lichtabgabevorrichtung 33, 63 aktiv sind. Insbesondere bei Verwendung hochviskoser Füllmassen, die ohne Betrieb eines Schwingungserregers 47A, 77A nur sehr schwer in eine Zahnkavität einbringbar sind, ist somit ausreichend gewährleistet, dass entweder nur die Füllmasse aus dem Behältnis 32, 62 ausgebracht oder die Lichtabgabevorrichtung 33, 63 betrieben wird.

Zur einfachen Bedienung ist Schaltglied 39, 69 mit einem Stellorgan 56, 87 verbunden. Stellorgan 56 kann unterschiedlichste Ausformungen aufweisen, zum Beispiel eine verschiebbare, den Handgriff 30, 60 zur Gänze oder teilweise umgebende Hülse.

Anstelle der bisher beschriebenen Ventile 43, 73 können selbstverständlich auch andere Sperrelemente wie zum Beispiel Schieber oder Klappen, Insbesondere andere elektrische oder mechanische Ventile verwendet werden. Figur 4 zeigt beispielhaft ein derartiges Ventil, das als Kugelventil 110 ausgebildet ist. Druckluftleitung 111 hat zwei Abschnitte mit unterschiedlichen Durchmessern, die durch einen sich verjüngenden, eine Schulter 114 bildenden Abschnitt verbunden sind. In der Druckluftleitung 111 wird ein Ventilkörper 112, der zum Beispiel als Kugel ausgestaltet ist, durch eine Feder 113 gegen die Schulter 114 gedrückt, so dass die Druckluftleitung 111 verschlossen ist und keine Druckluft zum Schwingungserreger und / oder zur Fördervorrichtung gelangt. Durch Betätigen eine Schaltvorrichtung, zum Beispiel Schaltvorrichtung 38A, 68A, verschiebt ein in der Druckluftleitung 111 angeordneter Kolben 115 den Ventilkörper 112 gegen die Federkraft von Feder 113, so dass der Ventilkörper 112 von der Schulter 114 beabstandet Ist und Druckluft den Ventilkörper 112 passieren kann.

Im Folgenden werden die bei den Handgriffen 30, 60 unterschiedlich ausgeführten Bauteile beschrieben.

Handgriff 30 umfasst eine Fördervorrichtung 41 zur Förderung der Füllmasse aus dem Behältnis 32 in Richtung der oder in die Zahnkavität. Fördervorrichtung 41 weist ein Förderelement 42, zum Beispiel einen Kolben, Schaft, Stößel oder Stempel auf, das beweglich am Handgriff 30 angeordnet ist. Das Füllmassebehältnis 32 hat einen Innenraum, in dem die Füllmasse aufgenommen ist, eine Abgabeöffnung 37, durch die die Füllmasse austreten kann, und eine bewegbare, verschiebbare Rückwand. Wird die Fördervorrichtung 41 betrieben, so wandert Förderelement 42 in Richtung der Anschlussvorrichtung 31, bis sie die Rückwand des Füllmassebehältnisses 32 erreicht. Durch das weitere Vorwärtstreiben des Förderelements 42 wird die Rückwand ebenfalls in Richtung der Abgabeöffnung 37 verschoben, wodurch die Füllmasse aus dem Behältnis 32 gedrückt wird.

Die Bewegung des Förderelements 42 erfolgt bei dem Handgriff. 30 manuell, also durch den Anwender. Dazu ist Förderelement 42 mit einem Stellelement,58 verbunden, das für den Anwender bedienbar am Handgriff 30 angebracht Ist. Stellelement 58 ist als Schieber ausgeführt, der über eine Hülse mit dem Förderelement 42 verbunden ist, Stellelement 58 kann jedoch auch andere Formen aufweisen und zum Beispiel als schwenkbarer Hebel oder Drehknopf ausgebildet sein.

Der in den Figuren 8 - 10 dargestellte Handgriff 60 weist im Unterschied dazu eine durch eine Energiequelle betriebene Fördervorrichtung 71 auf, die bevorzugt als fluidbetriebene Fördervorrichtung 71 A ausgebildet ist. Als Antriebsfluid können zum Beispiel Wasser oder Druckgas, bevorzugt Druckluft verwendet werden, die von externen Medienquellen zur Verfügung gestellt werden. Die Fördervorrichtung 71, 71A umfasst ein durch das Fluid in Richtung der Anschlussvorrichtung 61 verschiebbares Förderelement 82, zum Beispiel einen Kolben, Schaft, Stößel oder Stempel, das beweglich am Handgriff 60 angeordnet ist. Die Rückstellung des Förderelements 82 von der in Figur 9 dargestellten, am weitesten in das Behältnis 62 eingedrungene Position in die in Figur 10 dargestellte Ausgangsposition kann selbsttätig durch ein Federelement oder durch ein vom Anwender zu betätigendes Stellorgan erfolgen. Die Förderung der Füllmasse aus dem Behältnis 62 erfolgt in gleicher Weise wie weiter oben für den Handgriff 30 beschrieben.

Besonders bevorzugt wird der Schwingungserreger 77, 77A des Handgriffs 60 mit dem gleichen Fluid betrieben wie die Fördervorrichtung 71, 71A. Daraus resultiert ein besonders vorteilhafter, einfacher Aufbau des Handgriffs 60, der zum Beispiel eine gemeinsame Fluidleitung 85 für den Schwingungserreger 77A und die Fördervorrichtung 71, 71A umfasst. Zusätzlich kann der Schwingungserreger 77, 77A direkt oder indirekt mit der Fördervorrichtung 71, 71A verbunden sein. Es wird dann zumindest ein Teil des Fluids zum Betrieb des Schwingungserregers 77, 77A und der Fördervorrichtung 71, 71A verwendet, zum Beispiel vom Schwingungserreger 77, 77A zur Fördervorrichtung 71, 71A weitergeleitet, so dass das Fluid Druck auf die Fördervorrichtung 71, 71A ausübt und sie antreibt. Der Vorteil dieser Ausführungsform besteht insbesondere darin, dass sicher gestellt ist, dass immer, wenn Füllmasse gefördert wird, die Füllmasse mit Schwingung beaufschlagt wird, so dass eine optimale Förderung, Abgabe, Einbringung in die Kavität und Formung der Füllmasse gewährleistet ist.

Die Verbindung zwischen dem Schwingungserreger 77, 77A und der Fördervorrichtung 71, 71A kann zumindest die hohle Schwingachse 86 umfassen, durch deren . Innenraum der die Fördervorrichtung 71, 71A antreibende Fluidanteil zur Fördervorrichtung 71, 71A leitbar ist. Die Schwingachse 86 mündet in eine.Kammer 89, in der zumindest ein Teil der Fördervorrichtung 71, 71A, zum Beispiel ein Teil der Kolbenstange und der Kolbenkopf beweglich angeordnet sind. Schwingungserreger 77, 77A mit der hohlen Schwingachse 86 und Fördervorrichtung 71, 71A sind entlang einer gemeinsamen Achse angeordnet, Fördervorrichtung 71, 71A, insbesondere Förderelement 82 ist bevorzugt zentrisch im Handgriff 60 angeordnet.

Aus diesem Aufbau ergibt sich des Weiteren, dass die oben bereits beschriebene Schaltvorrichtung 68, 68A, insbesondere Ventil 73 neben dem Ein- bzw. Ausschalten des Schwingungserregers 77, 77A und der Lichtabgabevorrichtung 63 auch die Fördervorrichtung 71, 71A aktiviert bzw. stoppt, in dem es die Druckluftzufuhr durch Leitung 85 öffnet bzw. schließt. Damit Ist in vorteilhafter Weise eine Förderung der Füllmasse bei Aktivierung der Lichtabgabevorrichtung 63 vollständig ausgeschlossen.

In den Figuren 13-15 sind die ersten Enden 95A, 95B, 95C dreier dentaler Handgriffe 90A, 90B, 90C dargestellt. Die Handgriffe 90A, 90B, 90C gleichen in ihrem Aufbau den Handgriffen 30, 60: Sie weisen eine am ersten Ende 95A, 95B, 95C angeordnete Lichtabgabevorrichtung 93A, 93B, 93C auf, die zumindest eine LED 94A, 94B, 94C und zumindest eine Lichtabgebefläche 96A, 96B, 96C zur gerichteten Strahlungsabgabe auf die Präparationsstelle, insbesondere auf die zu härtende Füllmasse umfasst, und eine Anschlussvorrichtung 91A, 91B, 91C, an die ein Behältnis 92A, 92B, 92C für die Füllmasse anschließbar oder angeschlossen ist. Bevorzugt umfasst die Anschlussvorrichtung 91A, 91B, 91C wiederum eine Sonotrode 97A, 97B, 97C.

Zusätzlich sind an den ersten Enden 95A, 95B, 95C der Handgriffe 90A, 90B, 90C Sonden 98A, 98B, 98C vorgesehen, die insbesondere zum Vordichten und Formen der Füllmasse vor dpm Aushärten dienen. Die Sonden 98A, 98B, 98C sind bevorzugt derart auf den Handgriffen 90A, 90B, 90C angeordnet, dass die Füllmasse in den Zahnkavitäten mit den Sonden 98A, 98B, 98C gut zugänglich ist, ohne dass dabei andere Bauteile der Handgriffe 90A, 90B, 90C die Handhabung der Sonden 98A, 98B, 98C stören oder einschränken. Besonders bevorzugt sind die Sonden 98A, 98B, 98C dazu auf einer Trägervorrichtung befestigt, insbesondere auf dem stabförmigen Träger 99A, 99B, 99C auf dem auch die Lichtabgabevorrichtung 93A, 93B, 93C befestigt ist.

Die Sonden 98A, 98B, 98C weisen einen Verbindungsteil 100A, 100B, 100C zur Verbindung mit den Handgriffen 90A, 90B, 90C und einen Arbeitsteil 101A, 101B, 101C auf. Insbesondere die Arbeitsteile 101A, 101B, 101C können unterschiedliche Geometrien aufweisen: Der an den zylindrischen Verbindungsteil 100A anschließende spachtelförmige Arbeitsteil 101A von Sonde 98A ist im Wesentlichen quaderförmig ausgebildet und weist am Vorderende einen keilförmigen, sich verjüngenden Abschnitt auf. Arbeitsteil 101 B von Sonde 98B hat eine runde, halbkugelförmige Form, Arbeitsteil 101C von Sonde 98C ist als im Wesentlichen plane Ebene gestaltet. Abhängig von den mit den Sonden durchzuführenden Arbeiten und den Präferenzen der Anwender sind selbstverständlich auch andere geometrische Ausformungen der Arbeitsteile der Sonden möglich. Bevorzugt sind die Sonden 98A, 98B, 98C lösbar mit den Handgriffen 90A, 90B, 90C, insbesondere den Tragervorrichtungen verbunden, so dass sie vom Anwender ausgetauscht werden können.

Handgriffe 90A, 90B, 90C können somit in vorteilhafter Weise zur Durchführung von drei Funktionen verwendet werden, nämlich zum Einfüllen von Füllmasse in eine Kavität, zur Nachbehandlung der Füllmasse mit den Sonden 98A, 98B, 98C und zum Aushärten der Füllmasse.

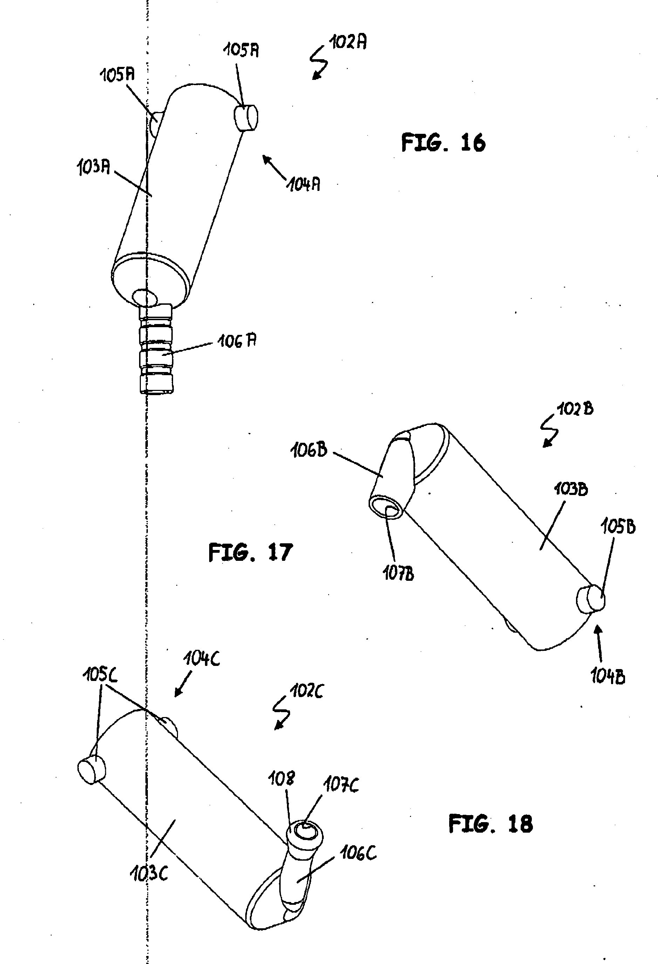

Die Figuren 16 - 18 zeigen Füllmassebehältnisse 102A, 102B, 102C, die mit den Handgriffen 10, 30, 60, 90 verbindbar sind. Die Füllmassebehältnisse 102A, 102B, 102C bestehen aus einem Körper 103A, 103B, 103C der innen einen Hohlraum aufweist, In dem die Füllmasse aufgenommen ist. An einem Ende des Körpers 103A, 103B. 103C befindet sich eine Anschlussvorrichtung 104A, 104B, 104C zur Verbindung des Behältnisses 102A, 102B, 102C mit einem dentalen Handgriff 10, 30, 60, 90. Die Anschlussvorrichtung 104A, 104B, 104C umfasst zwei Fortsätze 105A, 105B, 105C, die in eine Bajonettverbindung der dentalen Handgriffe 10, 30, 60, 90 einsetzbar sind. Die Anschlussvorrichtung 104A, 104B, 104C kann jedoch auch andere Ausgestaltungen annehmen, zum Beispiel als ringförmiger Flansch oder als Rücksprung.

An den Körper 103A, 103B, 103C schließt ein Abgaberohr oder eine Kanüle 106A, 106B, 106C an, durch die die Füllmasse gezielt In die Kavität einbringbar ist. Üblicherweise steht die Kanüle in einem Winkel von etwa 45° - bezogen auf die Längsachse des Füllmassebehälthisses 102A, 102B, 102C - vom Körper ab. Damit sind jedoch Insbesondere Kavitäten von weiter hinten im Mundraum angeordneten Zähnen nur schlecht zu befüllen. Der Winkel von 45° ist jedoch notwendig, da ansonsten die sehr zähflüssigen Füllmassen nicht zuverlässig und gleichmäßig aus den Füllmassebehältnissen 102A, 102B, 102C förderbar sind.

Überraschenderweise wurde in Versuchen jedoch festgestellt, dass bei Verwendung von Handgriffen mit Schwingungserreger, wie sie zum Beispiel in der Beschreibung zu den Figuren 5 - 10 dargestellt sind, die Viskosität der Füllmasse derart abnimmt, dass die Abgaberohre 106A, 106B, 106C auch in anderen Winkeln zwischen 45° bis etwa 90° am Körper 103A, 103B, 103C befestigbar sind. Dies erleichtert das Einbringen der Füllmasse in die Kavitäten für den Anwender erheblich.

Die Figuren 17, 18 zeigen zwei Füllmassebehältnisse 102B, 102C mit etwa mit 90° angeordneten Abgaberohren 106B, 106C. Abgaberohr 106B ist vergleichsweise kurz, so dass es nur wenig, etwa 2,0 - 3,0 mm über den Körper 103B ragt, und weist eine große Abgabeöffnung 107B mit einem Durchmesser von etwa 2,7 - 3,4 mm auf. Füllmassebehältnis 102B kann dem entsprechend vor allem zur Füllung größerer, flächiger Kavitäten verwendet werden.

Abgaberohr 106C ist länger und ragt etwa 4,0 - 6,0 mm über den Körper 103C. Der Durchmesser der Abgabeöffnung 107C beträgt etwa 1,3 -1,8 mm. Füllmassebehältnis 102C kann daher für kleine oder tiefer ausgebildete Kavitäten verwendet werden. Zusätzlich ist das Vorderende des Abgaberohrs 106C verdickt, mit einem in Richtung der Abgabeöffnung 107C zunehmenden Durchmesser ausgestaltet. Dieser Stempel 108 dient insbesondere der Verdichtung und Formung der in die Zahnkavität eingebrachten Füllmasse.

Abgaberohr 106A von Füllmassebehältnis 102A ist biegsam ausgebildet, so dass es in vorteilhafter Weise verschiedene Winkel - In Bezug auf die Längsachse des Füllmassebehältnisses 102A - einnehmen kann. Dies erleichtert das Einbringen der Füllmasse in die Zahnkavität für den Anwender zusätzlich und erspart dem Hersteller die Produktion unterschiedlicher Füllmassebehältnisse mit unterschiedlich gewinkelten Abgaberohren. Die Biegsamkeit oder Verformbarkeit des Abgaberohrs 106A kann durch unterschiedlichste Maßnahmen erreicht werden, zum Beispiel durch die Herstellung zumindest des Abgaberohrs 106A aus biegsamen Material wie Kunststoff, Insbesondere aus Polyamid, oder durch den Aufbau des Abgaberohrs 106A, insbesondere dadurch, dass das Abgaberohr 106A unterschiedliche Wandstärken aufweist, so wie dies in Figur 16 dargestellt ist, oder dass ein biegsames Innenrohr mit einem spiralförmigen, federnden Stützelement umgeben ist oder dass das Abgaberohr 106A einen faltenbalg-ähnlichen Aufbau aufweist.

In den Figuren 19-21 sind drei Schwingungsüberträger oder Sonotroden 116A, 116B, 116C abgebildet, die zum Beispiel als Teil der Anschlussvorrichtungen 31, 60 der Handgriffe 30, 60 einsetzbar sind. Die Sonotroden 116A, 116B, 116C umfassen eine Aufnahme, in die ein Füllmassebehältnis einsetzbar ist. Die Aufnahme ist insbesondere als längliche Aufnahme 117A, 117B, 117C mit einer Basis 118A, 118B, 118C und einem darum verlaufenden Rand 119A, 119B, 119C ausgeführt.

An einem Ende der Sonotroden 116A, 116B, 116C befindet sich eine Anschlussvorrichtung 120A, 120B, 120C zur Verbindung der Sonotroden 116A, 116B, 116C mit einem dentalen Handgriff 10, 30, 60, 90. Die Anschlussvorrichtung 120A, 120B, 120C umfasst zwei Fortsätze 121A, 121B, 121C, die in eine Bajonettverbindung der dentalen Handgriffe 10, 30, 60, 90 einsetzbar sind. Die Anschlussvorrichtung 120A, 120B, 120C kann jedoch auch anders ausgeführt sein, zum Beispiel als Steck-, Klemm- oder Schraubverbindung.

Jede Basis 118A, 118B, 118C ist in einen ersten und zweiten Abschnitt unterteilt, deren Innendurchmesser bzw. deren Wandstärken unterschiedlich sind und die durch eine Stufe 122A, 122B, 122C verbunden sind. Um eine gute Förderbarkeit der Füllmasse, Insbesondere beim Austritt aus den Füllmassebehältnissen zu bewirken, ist eine möglichst effiziente Übertragung der Schwingungen auf die Füllmasse notwendig, die durch einen engen, festen Kontakt zwischen den Sonotroden 116A, 118B, 118C und den Füllmassebehältnissen erreicht wird. Dieser enge Kontakt wird insbesondere im Abschnitt 123A, 123B, 123C mit dem geringeren Innendurchmesser sichergestellt, wobei der Innendurchmesser oder die Innenabmessung des Abschnitts 123A, 123B, 123C gleich oder sogar etwas geringer ist, als ein mit der Sonotrode 116A, 116B, 116C verwendbares Füllmassebehältnis.

An den Abschnitt 123A, 123B, 123C schließt ein Rohr 124A, 124B, 124C an, In das ein Abgaberohr oder eine Kanüle eines Füllmassebehältnis einführbar ist. Entsprechend den oben angeführten unterschiedlichen Ausführungsformen der Kanüle sind auch die Rohre 124A, 124B, 124C unterschiedlich ausgebildet und haben insbesondere eine unterschiedliche Länge, einen unterschiedlichen Durchmesser oder einen unterschiedlichen Neigungswinkel, insbesondere zwischen 45° bis in etwa 90° in Bezug auf die Längsachse der Sonotroden 116A, 116B, 116C. Das Rohr 124A, 124B, 124C kann an seinem freien Ende ebenfalls Verstärkungen oder Verdickungen zum Verdichten der Füllmasse haben.

Die Erfindung ist nicht auf das dargestellte Anwendungsgebiet und das beschriebene Ausführungsbeispiel beschränkt, sondern umfaßt alle Ausführungsmöglichkeiten, die das prinzipielle, sinngemäße Funktionsprinzip der Erfindung nicht verändern. So kann der Schwingungserreger auch als elektrisch betriebener Schwingungserreger ausgebildet sein, zum Beispiel als Piezoelement oder als magnetostriktives Element. Umfasst die Lichtabgabevorrichtung eine im Handgriff angeordnete Lichtquelle, insbesondere ein optisches Halbleiterelement, so können des Weiteren in einem bevorzugten Ausführungsbeispiel der Schwingungserreger und die Lichtquelle mit einer gemeinsamen Energiequelle verbunden sein. Gegebenenfalls sind dann zwei Schaltungen notwendig, um dem elektrisch betriebenen Schwingungserreger und der Lichtquelle die unterschiedlichen benötigten Stromparameter zur Verfügung stellen zu können.

## Patentansprüche

1. Dentafer Handgriff (10, 30, 60, 90) zur Abgabe von Füllmasse in eine Zahnkavität mit einer Anschlussvorrichtung (11, 31, 61. 91), an die ein Behältnis (12, 32, 62, 92) für die Füllmasse anschließbar oder angeschlossen ist, einer Fördervorrichtung (21, 41, 71) zur Förderung der Füllmasse aus dem Füllmassebehältnis (12, 32, 62, 92) und mit einer Lichtabgabevorrichtung (13, 33, 63, 93), über die Strahlung mit einer Wellenlänge und Strahlungsleistung zum Aushärten von Füllmaterial bereitstellbar ist, **gekennzeichnet durch**
einen Schwingungserreger (47, 77) zur Erzeugung von Schwingungen, die auf die Füllmasse übertragbar sind, und **durch** eine Schaltvorrichtung (38, 38A, 68, 68A) umfassende Sicherungsmittel zum wahlweisen Betrieb des Schwingungserregers (47, 77) oder der Lichtabgabevorrichtung (13, 33, 63, 93).

2. Dentaler Handgriff (10. 30, 60, 90) nach Anspruch 1, **gekennzeichnet durch**
ein Kupprungselement (14, 34, 64) zur Verbindung der Lichtabgabevorrichtung (33, 63, 93) mit einer externen Licht- oder Energiequelle, wobei das Kupplungselement (14, 34, 64) bevorzugt derart ausgebildet ist, dass es an ein Gegenkupplungselement, das zum Anschluss an ein dentales Handinstrument mit einer anderen Funktion vorgesehen ist, kuppelbar ist.

3. Dentaler Handgriff (10, 30, 60, 90) nach Anspruch 1 oder 2, **gekennzeichnet durch**
ein Kupplungselement (64) zur Verbindung des Schwingungserregers (47, 77) mit einer Versorgung für ein Antriebsmedium, wobei das Kupplungselement (64) bevorzugt derart ausgebildet ist, dass es an ein Gegenkupplungselement, das zum Anschluss an ein dentales Handinstrument mit einer anderen Funktion vorgesehen ist, kuppelbar ist.

4. Dentaler Handgriff (10, 30, 60, 90) nach einem der vorhergehenden Ansprüche,
**dadurch gekennzeichnet, dass**
die Lichtabgabevorrichtung (13, 33, 63, 93) zumindest einen Lichtleiter (18) umfasst, der insbesondere als Glasstab, Glasfaser oder Glasfaserstab ausgebildet ist, und / oder dass die Lichtabgabevorrichtung (13, 33, 63, 93) zumindest eine Lichtquelle (44, 84, 94) umfasst, die Insbesondere als optisches Halbleiterelement ausgebildet ist.

5. Dentaler Handgriff (10, 30, 60, 90) nach einem der vorhergehenden Ansprüche,
**dadurch gekennzeichnet, dass**
der Handgriff (10, 30, 60, 90) ein erstes Ende (15, 35, 65, 95) aufweist, an dem die Anschlussvorrichtung (11, 31, 61, 91) für das Füllmassebehältnis (12, 32, 62, 92) vorgesehen ist, und dass die Lichtabgabevorrichtung (13, 33, 63, 93) zumindest eine Lichtabgabefläche (16, 36, 66, 96) aufweist, wobei die Lichtabgabefläche (16, 36, 66, 96) ebenfalls am ersten Ende (15, 35, 65, 95) des Handgriffs (10, 30, 60, 90) angeordnet oder anordenbar ist.

6. Dentaler Handgriff (10, 30, 60, 90) nach einem der vorhergehenden Ansprüche,
**dadurch gekennzeichnet, dass**
Sicherungsmittel vorgesehen sind, die die Lichtabgabefläche(n) (16, 36, 66, 96) der Lichtabgabevorrichtung (13, 33, 63, 93) und die Abgabeöffnung(en) (17, 37, 67) das Füllmassebehältnisses (12, 32, 62, 92) umfassen, wobei die Lichtabgabefläche(n) (16, 36, 66, 96) und die Abgabeöffnung(en) (17, 37, 67) so angeordnet sind, dass sie in unterschiedliche Richtungen weisen.

7. Dentaler Handgriff (10, 30, 60, 90) nach einem der vorhergehenden Ansprüche,
**dadurch gekennzeichnet, dass**
Sicherundsmittel vorgesehen sind, die eine beweglich am dentalen Handgriff (10, 30, 60, 90) angeordnete Lichtabgabevorrichtung (13, 33, 63, 93) umfassen.

8. Dentaler Handgriff (10, 30, 60, 90) nach einem der vorhergehenden Ansprüche,
**dadurch gekennzeichnet, dass**
Sicherungsmittel vorgesehen sind, die eine Vorrichtung, insbesondere eine mechanische Vorrichtung, zum Beispiel eine dreh- oder schwenkbare Abdeckvorrichtung, umfassen, die so ausgebildet ist, dass wahlweise die Lichtabgabefläche(n) (16, 36, 66, 96) oder die Abgabeöffnung(en) (17, 37, 67) des Füllmassebehältrisses (12, 32, 62, 92) freigebbar ist /sind.

9. Dentaler Handgriff (10, 30, 60, 90) nach einem der vorhergehenden Ansprüche, **gekennzeichnet, durch**
Sicherungsmittel, die eine Vorrichtung (38, 68), insbesondere eine Schaltvorrichtung (38A, 68A), umfassen, die so ausgebildet ist, dass wahlweise die Fördervorrichtung (21, 41, 71) zur Förderung der Füllmasse oder die Lichtabgabevorrichtung (13, 33, 63, 93) betreibbar sind.

10. Dentaler Handgriff (10, 30, 60, 90) nach einem der Ansprüche 1-8, **gekennzeichnet, durch**
eine einzige Schaltvorrichtung (68, 68A) zum wahlweisen Betrieb des Schwingungserregers (77, 77A) und der Fördervorrichtung (71, 71A) oder der Lichtabgabevorrichtung (13, 33, 63, 93).

11. Dentaler Handgriff (10, 30, 60, 90) nach einem der vorhergehenden Ansprüche,
**dadurch gekennzeichnet, dass**
die Schaltvorrichtung (38A, 68A) zumindest ein gemeinsames Schaltglied (39, 69) für die Fördervorrichtung (21, 41, 71) und die Lichtabgabevorrichtung (13, 33, 63, 93) oder für den Schwingungserreger (47, 77) und die Lichtabgabevorrichtung (13, 33, 63, 93) aufweist, wobei das Schaltglied (39, 69) bevorzugt als Kulissenelement (40, 70) ausgebildet ist.

12. Dentaler Handgriff (10, 30, 60, 90) nach einem der vorhergehenden Ansprüche,
**dadurch gekennzeichnet, dass**
die Schalvorrichtung (38A, 68A) elektrische Schaltkontakte (72) aufweist.

13. Dentaler Handgriff (10, 30, 60, 90) nach einem der vorhergehenden Ansprüche,
**dadurch gekennzeichnet, dass**
die Schaltvorrichtung (38A, 68A) zumindest ein Ventil (43, 73) aufweist.

14. Dentaler Handgriff (10, 30, 60, 90) nach einem der vorhergehenden Ansprüche,
**dadurch gekennzeichnet, dass**
die Schaltvorrichtung (38A, 68A) ein bewegbar am Handgriff (10, 30, 60, 90) befestigtes Schaltglied (39, 69) mit einem Führungsschlitz (74), einen beweglich im Handgriffe (10, 30, 60, 90) aufgenommenen Ventilkörper (75) und mit dem Schaltglied (39, 69) verbundene elektrische Kontakte umfasst, wobei am Ventilkörper (75) ein exzentrisch angeordneten Führungsstift (76) vorgesehen ist, der in den Führungsschlitz (74) eingreift.

15. Dentaler Handgriff (10, 30, 60, 90) nach einem der vorhergehenden Ansprüche,
**gekennzeichnet durch**
eine mit dem Handgriff (10, 30, 60, 90) verbundene oder verbindbare Sonde (8, 98A, 98B, 98C).

## Claims

1. Dental handgrip (10, 30, 60, 90) for delivering filling compound into a tooth cavity with a connection device (11,31,61,91), to which a container (12, 32, 62, 92) for the filling compound can be connected or is connected, a feeding device (21, 41, 71) for feeding the filling compound from the filling compound container (12, 32, 62, 92) and with a light emission device (13, 33, 63, 93) via which radiation with a wavelength and radiant power for the hardening of filling compound can be made available,
**characterized by**
a vibration generator (47, 77) for the generation of vibrations, which can be transmitted to the filling compound, and by safety means comprising a switching device (38, 38A, 68, 68A) for the alternative operation of the vibration generator (47, 77) or the light emission device (13, 33, 63, 93).

2. Dental handgrip (10, 30, 60, 90) according to claim 1, **characterized by**
a coupling element (14, 34, 64) for the connection of the light emission device (33, 63, 93) to an external light or energy source, wherein the coupling element (14, 34, 64) is preferably designed such that it can be coupled to a counter-coupling element, which is provided for the connection to a dental hand instrument with another function.

3. Dental handgrip (10, 30, 60, 90) according to claim 1 or 2, **characterized by**
a coupling element (64) for the connection of the vibration generator (47, 77) to a supply for a driving medium, wherein the coupling element (64) is preferably designed such that it can be coupled to a counter-coupling element, which is provided for the connection to a dental hand instrument with another function.

4. Dental handgrip (10, 30, 60, 90) according to any one of the preceding claims,
**characterized in that**
the light emission device (13, 33, 63, 93) comprises at least one light guide (18), which is designed in particular as a glass rod, glass fibre or glass fibre rod, and/or **in that** the light emission device (13, 33, 63, 93) comprises at least one light source (44, 84, 94), which is designed in particular as an optical semiconductor element.

5. Dental handgrip (10, 30, 60, 90) according to any one of the preceding claims,
**characterized in that**
the handgrip (10, 30, 60, 90) comprises a first end (15, 35, 65, 95), at which the connection element (11, 31, 61, 91) for the filling compound container (12, 32, 62, 92) is provided, and **in that** the light emission device (13, 33, 63, 93) comprises at least one light emission area (16, 36, 66, 96), wherein the light emission area (16, 36, 66, 96) is also disposed or can be disposed at the first end (15, 35, 65, 95) of the handgrip (10, 30, 60, 90).

6. Dental handgrip (10, 30, 60, 90) according to any one of the preceding claims,
**characterized in that**
safety means are provided which comprise the light emission area(s) (16, 36, 66, 96) of the light emission device (13, 33, 63, 93) and the delivery opening(s) (17, 37, 67) of the filling compound container (12, 32, 62, 92), wherein the light emission area(s) (16, 36, 66, 96) and the delivery opening(s) (17, 37, 67) are disposed in such a way that they point in different directions.

7. Dental handgrip (10, 30, 60, 90) according to any one of the preceding claims,
**characterized in that**
safety means are provided which comprise a light emission device (13, 33, 63, 93) which is movably disposed on the dental handgrip (10, 30, 60, 90).

8. Dental handgrip (10, 30, 60, 90) according to any one of the preceding claims,
**characterized in that**
safety means are provided which comprise a device, in particular a mechanical device, for example a rotatable or swivelling cover device, which is designed in such a way that alternatively the light emission area(s) (16, 36, 66, 96) or the delivery opening(s) (17, 37, 67) of the filling compound container (12, 32, 62, 92) can be released.

9. Dental handgrip (10, 30, 60, 90) according to any one of the preceding claims,
**characterized by**
safety means which comprise a device (38, 68), in particular is switching device (38A, 68A), which is designed in such a way that the feeding device (21, 41, 71) for feeding the filling compound or the light emission device (13, 33, 63, 93) can alternatively be operated.

10. Dental handgrip (10, 30, 60, 90) according to any one of the claims 1 - 8,
**characterized by**
a single switching device (68, 68A) for alternative operation of the vibration generator (77, 77A) and the feeding device (71, 71A) or the light emission device (13, 33, 63, 93).

11. Dental handgrip (10, 30, 60, 90) according to any one of the preceding claims,
**characterized in that**
the switching device (38A, 68A) comprises at least one common switching element (39, 69) for the feeding device (21, 41, 71) and the light emission device (13, 33, 63, 93) or for the vibration generator (47, 77) and the light emission device (13, 33, 63, 93), wherein the switching element (39, 69) is preferably designed as a gate element (40,70).

12. Dental handgrip (10, 30, 60, 90) according to any one of the preceding claims,
**characterized in that**
the switching device (38A, 68A) comprises electrical switching contacts (72).

13. Dental handgrip (10, 30, 60, 90) according to any one of the preceding claims,
**characterized in that**
the switching device (38A, 68A) comprises at least one valve (43, 73).

14. Dental handgrip (10, 30, 60, 90) according to any one of the preceding claims,
**characterized in that**
the switching device (38A, 68A) comprises a switching element (39, 69) with a guide slot (74), said switching element (39, 69) being movably mounted to the handgrip (10, 30, 60, 90), a valve body (75) movably accommodated in the handgrip (10, 30, 60, 90) and electrical contacts connected to the switching element (39, 69), wherein an eccentrically disposed guide pin (76) is provided on the valve body (75), said guide pin (76) engaging in the guide slot (74).

15. Dental handgrip (10, 30, 60, 90) according to any one of the preceding claims,
**characterized by**
a probe (8, 98A, 98B, 98C) connected or connectable to the handgrip (10, 30, 60, 90).

## Revendications

1. Poignée dentaire (10, 30, 60, 90) pour délivrer de la masse de remplissage dans une cavité de dent comprenant un dispositif de connexion (11, 31, 61, 91), sur lequel un contenant (12, 32, 62, 92) pour la masse de remplissage peut être connecté ou est connecté, un dispositif de transport (21, 41, 71) pour transporter la masse de remplissage depuis le contenant de masse de remplissage (12, 32, 62, 92) et un dispositif d'éclairage (13, 33, 63, 93), par lequel un rayonnement avec une longueur d'onde et une puissance rayonnée peut être mis à disposition pour durcir la masse de remplissage, **caractérisée par**
un générateur de vibrations (47, 77) pour produire des vibrations qui peuvent être transmises à la masse de remplissage et un moyen de sécurité comprenant un dispositif de commutation (38, 38A, 68, 68A) pour le fonctionnement au choix du générateur de vibrations (47, 77) ou du dispositif d'éclairage (13, 33, 63, 93).

2. Poignée dentaire (10, 30, 60, 90) selon la revendication 1, **caractérisée par**
un élément d'accouplement (14, 34, 64) pour relier le dispositif d'éclairage (33, 63, 93) à une source de lumière ou d'énergie externe, l'élément d'accouplement (14, 34, 64) étant de préférence conçu de manière à pouvoir être couplé à un élément de contre-accouplement qui est prévu pour pouvoir être couplé à un instrument manuel dentaire avec une autre fonction.

3. Poignée dentaire (10, 30, 60, 90) selon la revendication 1 ou 2, **caractérisée par**
un élément d'accouplement (64) pour relier le générateur de vibrations (47, 77) à une alimentation destinée à un milieu d'entraînement, l'élément d'accouplement (64) étant de préférence conçu de manière à pouvoir être couplé à un élément de contre-accouplement qui est prévu pour pouvoir être couplé à un instrument manuel dentaire avec une autre fonction.

4. Poignée dentaire (10, 30, 60, 90) selon l'une des revendications précédentes, **caractérisée en ce que**
le dispositif d'éclairage (13, 33, 63, 93) comprend au moins un conducteur optique (18), conçu au moins comme tige de verre, fibre de verre ou tige de fibre de verre et / ou que le dispositif d'éclairage (13, 33, 63, 93) comprend au moins une source lumineuse (44, 84, 94) conçue particulièrement comme élément de semi-conducteur optique.

5. Poignée dentaire (10, 30, 60, 90) selon l'une des revendications précédentes, **caractérisée en ce que**
la poignée (10, 30, 60, 90) présente une première extrémité (15, 35, 65, 95), sur laquelle le dispositif de connexion (11, 31, 61, 91) pour le contenant de masse de remplissage (12, 32, 62, 92) est prévu et **en ce que** le dispositif d'éclairage (13, 33, 63, 93) présente au moins une face d'éclairage (16, 36, 66, 96), la face d'éclairage (16, 36, 66, 96) étant également placée ou pouvant être placée sur la première extrémité (15, 35, 65, 95) de la poignée (10, 30, 60, 90).

6. Poignée dentaire (10, 30, 60, 90) selon l'une des revendications précédentes, **caractérisée en ce que**
des moyens de sécurité sont prévus qui englobent la/les face(s) d'éclairage (16, 36, 66, 96) du dispositif d'éclairage (13, 33, 63, 93) et la/les ouverture(s) de distribution (17, 37, 67) du contenant de masse de remplissage (12, 32, 62, 92), la/les face(s) d'éclairage (16, 36, 66, 96) et la/les ouverture(s) de distribution (17, 37, 67) étant placées de manière à présenter différentes orientations.

7. Poignée dentaire (10, 30, 60, 90) selon l'une des revendications précédentes, **caractérisée en ce que**
des moyens de sécurité sont prévus qui englobent de manière mobile un dispositif d'éclairage (13, 33, 63, 93) placé sur la poignée dentaire (10, 30, 60, 90).

8. Poignée dentaire (10, 30, 60, 90) selon l'une des revendications précédentes, **caractérisée en ce que**
des moyens de sécurité sont prévus qui comprennent un dispositif, particulièrement un dispositif mécanique, par exemple un dispositif de recouvrement rotatif ou pivotant, conçu de manière à ce qu'au choix, la/les face(s) d'éclairage (16, 36, 66, 96) ou la/les ouverture(s) de distribution (17, 37, 67) du contenant de masse de remplissage (12, 32, 62, 92) puisse(nt) être libérée(s).

9. Poignée dentaire (10, 30, 60, 90) selon l'une des revendications précédentes, **caractérisée par**
des moyens de sécurité qui comprennent un dispositif (38, 68), particulièrement un dispositif de commutation (38A, 68A) conçu de manière à ce qu'au choix, le dispositif de transport (21, 41, 71) pour transporter la masse de remplissage ou le dispositif d'éclairage (13, 33, 63, 93) puisse(nt) être utilisé(s).

10. Poignée dentaire (10, 30, 60, 90) selon l'une des revendications 1 - 8, **caractérisée par**
un seul dispositif de commutation (68, 68A) pour le fonctionnement au choix du générateur de vibrations (77, 77A) et du dispositif de transport (71, 71A) ou du dispositif d'éclairage (13, 33, 63, 93).

11. Poignée dentaire (10, 30, 60, 90) selon l'une des revendications précédentes, **caractérisée en ce que**
le dispositif de commutation (38A, 68A) présente au moins un membre de commutation commun (39, 69) pour le dispositif de transport (21, 41, 71) et le dispositif d'éclairage (13, 33, 63, 93) ou pour le générateur de vibrations (47, 77) et le dispositif d'éclairage (13, 33, 63, 93), le membre de commutation (39, 69) étant de préférence un élément à coulisse (40, 70).

12. Poignée dentaire (10, 30, 60, 90) selon l'une des revendications précédentes, **caractérisée en ce que**
le dispositif de commutation (38A, 68A) présente des contacts de commutation électriques (72).

13. Poignée dentaire (10, 30, 60, 90) selon l'une des revendications précédentes, **caractérisée en ce que**
le dispositif de commutation (38A, 68A) présente au moins une soupape (43, 73).

14. Poignée dentaire (10, 30, 60, 90) selon l'une des revendications précédentes, **caractérisée en ce que**
le dispositif de commutation (38A, 68A) comprend un membre de commutation (39, 69) fixé de manière mobile sur la poignée (10, 30, 60, 90) avec une fente de guidage (74), un corps de soupape (75) reçu de manière mobile dans la poignée (10, 30, 60, 90) et des contacts électriques reliés au membre de commutation (39, 69), un tenon de guidage (76) étant placé de manière excentrée sur le corps de soupape (75), lequel s'engage dans la fente de guidage (74).

15. Poignée dentaire (10, 30, 60, 90) selon l'une des revendications précédentes, **caractérisée par**
une sonde (8, 98A, 98B, 98C) reliée ou pouvant être reliée à la poignée (10, 30, 60, 90).
